# EUROPÄISCHE PATENTSCHRIFT

(11) **EP 3 301 696 B1**
(45) Veröffentlichungstag und Bekanntmachung des Hinweises auf die Patenterteilung: **16.06.2021**
(21) Anmeldenummer: 17191748.7
(22) Anmeldetag: 19.09.2017
(51) Int. Cl.: H01H 13/52, G01L 1/20

(54) **SCHALTEREINHEIT UND GEHÄUSE**
SWITCH UNIT AND HOUSING
UNITÉ DE COMMUTATION ET BOITIER

(30) Priorität: 29.09.2016 DE 102016118430
(43) Veröffentlichungstag der Anmeldung: 04.04.2018
(60) Teilanmeldung: 21171622.0
(73) Patentinhaber: Schaefer GmbH, 72488 Sigmaringen (DE)
(72) Erfinder: SOMMER, Lutz, 72458 Albstadt (DE); GEISER, Florian, 72458 Albstadt (DE)
(74) Vertreter: Rüger Abel Patentanwälte PartGmbB

(56) Entgegenhaltungen:
- CN-U- 201 732 710
- JP-A- H1 196 849
- US-A1- 2009 321 237
- US-B2- 6 639 159

## Beschreibung

Die Erfindung betrifft eine Schaltereinheit, insbesondere eine Schaltereinheit mit einer Möglichkeit zur Erkennung des Verschleißzustands oder eines Wartungsbedarfs.

Schalter und Schaltereinheiten zum manuellen Öffnen und Schließen von Stromkreisen sind prinzipiell bekannt. Zum Beispiel offenbart die US 6,987,233 B2 eine Schaltereinheit zum Einbau in Schalttafeln, wobei die Schaltereinheit ein Gehäuse mit Betätigungsknopf und Kontrolllampe sowie den eigentlichen elektrischen Schalter enthält. Der Schalter weist drei Kontakte und ein Schließelement auf, das einen der drei Kontakte alternativ mit dem einen oder anderen der beiden verbleibenden Kontakte verbindet. Die Betätigung erfolgt durch den Betätigungsknopf, der in dem Gehäuse beweglich gehalten ist. Das Schaltergehäuse enthält wenigstens einen leitfähigen zusätzlichen Pfad, basierend auf mit Metall- oder Kohlenstoffpartikeln gefüllten bzw. intrinsisch leitfähigen Polymeren. Dieser zusätzliche leitfähige Pfad dient der Ableitung von elektrischen Entladungen.

Außerdem beschreibt die US 5,175,214 ein elektrisch leitfähiges Elastomer, das seine Leifähigkeit unter Druck verändert. Das Elastomer kann zur Herstellung eines druckempfindlichen Schalterpfads genutzt werden.

Weiteren Stand der Technik bilden die DE 10 2007 016 A1, die US 6,469,267 und die US 6,072,130 A.

Schalter können infolge von Verschleiß, Alterung, Korrosion, Vandalismus oder aus anderen Gründen plötzlich oder allmählich versagen, woraus Gefahren für Personen oder Anlagen erwachsen können.

Aus der US 6 639 159 B2 ist eine Schaltereinheit bekannt, die eine erste Kontakteinrichtung, eine zweite Kontakteinrichtung und ein verformbar ausgebildetes Schließelement zur Herstellung und Trennung einer elektrischen Verbindung zwischen der ersten Kontakteinrichtung und der zweiten Kontakteinrichtung aufweist. Das Schließelement und das Betätigungselement sind elektrisch leitfähig ausgebildet. Ein erster Schalterstromkreis beinhaltet die erste Kontakteinrichtung die zweite Kontakteinrichtung und das Schließelement. Ein zweiter Schalterstromkreis beinhaltet das Betätigungselement, das Schließelement und die zweite Kontakteinrichtung.

Es ist Aufgabe der Erfindung, ein Konzept anzugeben, mit dem sich Gefahren für Mensch und Anlagen durch Schalterversagen mindern oder beseitigen lassen.

Diese Aufgabe wird mit einer Schaltereinheit nach Anspruch 1 gelöst:
Die erfindungsgemäße Schaltereinheit verfügt über zwei Schaltkreise und gewährleistet damit im Sinne des Redundanzprinzips eine höhere technische Verfügbarkeit. Die erfindungsgemäße Schaltereinheit umfasst dazu wenigstens zwei Kontakteinrichtungen und ein verformbar ausgebildetes und/oder beweglich angeordnetes Schließelement zur Herstellung und Trennung einer elektrischen Verbindung zwischen zwei Kontakteinrichtungen. Das Schließelement besteht aus einem dünnen flächenhaften, elektrisch leitenden Gebilde, z.B. einem dünnen Blech bzw. Dom. Vorzugsweise ist es als Schnappfeder ausgebildet, z.B. indem es um zwei zueinander winklige Achsen gewölbt ist.

Außerdem ist ein elektrisch leitfähiges Betätigungselement vorgesehen, das dem Schließelement zugeordnet ist. Die Schaltereinheit stellt somit einen ersten Schalterstromkreis bereit, der die erste Kontakteinrichtung, die zweite Kontakteinrichtung sowie das Schließelement beinhaltet. In diesem Schalterstromkreis fließt der Strom längs (quer zur Flächennormalen), d.h. von Kontakt zu Kontakt durch das Schließelement. Außerdem weist die Schaltereinheit einen zweiten Schalterstromkreis auf, der das Betätigungselement, das Schließelement und eine der beiden Kontakteinrichtungen beinhaltet. In diesem Schalterstromkreis fließt der Strom quer durch das Schließelement, d.h. in Richtung der Flächennormalen des Schließelements.

Die beiden Schalterstromkreise zeigen bei Betätigung und bei Verschleiß charakteristische, jedoch unterschiedliche Verhaltensmuster, aus denen sich Aussagen über ein vorhandenes Teilversagen und bevorstehendes Totalversagen der Schaltereinheit ableiten lassen. Insbesondere kann die Schaltereinheit dadurch eine Selbstüberwachung durchführen. Dazu kann sie eine entsprechende Überwachungsschaltung, zum Beispiel in Gestalt eines internen oder externen Mikrocontrollers, aufweisen, der die wenigstens zwei Schalterstromkreise überwacht und über eine Datenerfassung deren Verhalten auswertet. Wird ein unregelmäßiges Verhalten der Schaltereinheit erkannt, kann dies optisch, akustisch oder durch Fernübertragung der betätigenden Person oder einer fernüberwachenden Einheit signalisiert und somit ein Wartungsvorgang ausgelöst werden.

Zusätzlich zu den beiden Schalterstromkreisen kann ein Schalterteststromkreis vorgesehen sein, der durch die erste Kontakteinrichtung und das Schließelement führt. Auf diese Weise kann zuverlässig die Integrität des Schließelements überwacht werden. Der Schalterteststromkreis kann gegebenenfalls außerdem die zweite Kontakteinrichtung beinhalten.

Außerdem kann ein dritter Schalterstromkreis vorgesehen sein, der das Betätigungselement, das Schließelement und die erste Kontakteinrichtung beinhaltet. Dieser Stromkreis spricht empfindlich auf Schädigungen des Schließelements an, bevor die Schaltereinheit gänzlich unbrauchbar wird.

Mit den genannten verschiedenen Stromkreisen, die verschiedene Kombinationen der Kontakte bzw. Kontakteinrichtungen des Betätigungselements und des Schließelements nutzen, ist unter Verwendung bspw. einer Auswerteeinrichtung in Form eines externen Mikrokontrollers eine prädiktive, d.h. vorhersagende Instandhaltung der Schaltereinheit möglich. Dies gilt unabhängig davon, ob das Betätigungselement ständig an dem Schließelement anliegt oder mit diesem nur bei Betätigung in Berührung kommt.

Bei bevorzugten Ausführungsformen weist wenigstens das Schließelement oder das Betätigungselement Kontakteinrichtungen auf, die miteinander elektrisch verbunden sind. Damit weist die Schaltereinheit insgesamt wenigstens drei Kontakte auf, von denen zwei mit dem Schließelement in ständiger elektrischer Verbindung stehen. Dies können die Kontakte ein- und derselben Kontakteinrichtung oder, in einer anderen Variante, auch Kontakte der beiden verschiedenen Kontakteinrichtungen sein, womit sich weitere Testmöglichkeiten hinsichtlich der Integrität des Schließelements ergeben.

Vorzugsweise ist das Betätigungselement elektrisch leitfähig - basierend auf mit Metall- oder Kohlenstoffpartikeln gefüllten oder auch leitfähigen Polymeren - ausgebildet, d.h. es kann entweder dauernd elektrisch leitend ausgebildet sein oder die Fähigkeit haben, bei mechanischer Beanspruchung, beispielsweise unter Druck, aus einem im Wesentlichen nicht oder wenig leitenden Zustand in einen elektrisch besser leitenden Zustand überzugehen. Unter dem Begriff "leitfähig", wird die Fähigkeit verstanden, elektrisch leitend zu sein oder einen elektrisch leitenden Zustand anzunehmen.

Die Verwendung eines solchen Kunststoffs mit druckabhängiger Leitfähigkeit als Betätigungselement ermöglicht die Erfassung der auf die Schaltereinheit ausgeübten Betätigungskraft. Nehmen Übergangswiderstände an dem Schalter, beispielsweise infolge von Kontaktkorrosion oder Verschleißerscheinungen allmählich zu, werden Bediener die Schaltereinheit im Mittel mit erhöhter Betätigungskraft betätigen. Eine zu der Schaltereinheit gehörige Auswerteeinrichtung, beispielweise in Gestalt eines externen Mikrocontrollers, kann dies erfassen und beispielsweise dann ein Wartungsaufforderungssignal bereitstellen, wenn sich Schalterbetätigungen mit erhöhter Betätigungskraft häufen. Ferner besteht auch die Möglichkeit, über die Widerstandsveränderung des Polymers die auf das Betätigungselement ausgeübte Kraft bzw. den Druck messtechnisch zu erfassen und damit auch Ereignisse wie bspw. Vandalismus-Vorfälle oder unsachgemäße Bedienungen zu protokollieren.

Die Ausbildung des Betätigungselements, basierend auf mit Metall- oder Kohlenstoffpartikeln gefüllten oder intrinsisch leitfähigen Polymeren, ermöglicht einen besonders einfachen Schalteraufbau. Außerdem führt die Kombination mit einem Schließelement aus Metall und/oder Kontakteinrichtungen aus Metall infolge der Korrosionsbeständigkeit von Kunststoff zu einer besonders verlässlichen Schaltereinheit. Ist als Kunststoff ein gefüllter ("compoundierter") Kunststoff vorgesehen, erhält dieser seine Leitfähigkeit durch Einlagerung von leitfähigen Partikeln, beispielsweise aus Kohlenstoff oder Metall. Die Kunststoffmatrix kann bedarfsweise jedoch aus dem gleichen Kunststoff bestehen wie das elektrisch isolierende sonstige Schaltergehäuse. Die mechanische und elektrische Kontaktstelle zwischen dem Betätigungselement und des Schließelement kann tribologisch optimiert werden und unterliegt dann nur einem geringen mechanischen Verschleiß.

Zusätzlich erlaubt das elektrisch leitfähig ausgeführte Betätigungselement im Gegensatz zu der Verwendung weiterer Sensoren, wie bspw. piezo-elektrischer Komponenten, eine sehr einfach zu gestaltende Erfassung des Zustands des Gehäuses der darin integrierten Schaltereinheit. Durch den sich verändernden elektrischen Widerstand bei Einwirken einer Kraftkomponente (Druck) auf das elektrisch leitfähige Polymer kann indirekt auch eine Aussage über die Lage der Schaltereinheit relativ zum Betätigungsknopf erfolgen. Sollte bspw. ein Bruch des Gehäuses auftreten, ist in aller Regel davon auszugehen, dass sich die Platine mit der Schaltereinheit in ihrer Lage verändert. Dadurch werden bei intakter Schaltereinheit Schaltwünsche eines Benutzers nicht, nur noch sporadisch oder nur noch bei höherer Betätigungskraft erfasst. Dieser Zustand kann einerseits sowohl schleichend über einen längeren Zeitraum eintreten, was über eine sinkende Leitfähigkeit des Polymers in Folge eines vergrößerten oder veränderten Abstands zum Betätigungsknopf detektiert werden kann. Andererseits ist auch ein plötzlich auftretender Bruch des Schaltergehäuses denkbar (bspw. nach Vandalismuseinwirkung). Um diesen Fall ebenfalls zu diagnostizieren, ist zumindest die Innenseite des Gehäuses der Schaltereinheit aus einem elektrisch leitfähigen Polymer gestaltet. Durch einen geringen und sicherheitstechnisch unkritischen Prüfstrom, welcher in regelmäßigen Abständen über das Betätigungselement und den Betätigungsknopf die Innenseite des Gehäuses durchfließt ohne für Benutzer an der Außenseite eine Gefahr darzustellen, kann mit Hilfe einer Auswertungseinrichtung in Form eines externen Mikrokontrollers bei Unterbrechung dieses Strompfades ein Schaden am Schaltergehäuse detektiert und ein Wartungsvorgang ausgelöst werden. Elektrisch leitfähige Polymere eigenen sich daher vorzugsweise für multifunktionale Anwendungen und bedürfen im Gegensatz zu piezoelektrischen Sensoren, bspw. zur Erfassung von Schwingungen, einer wesentlich einfacheren Auswertungslogik.

Weitere Einzelheiten vorteilhafter Ausführungsformen der Erfindung sind Gegenstand von Unteransprüchen sowie der Zeichnung und der zugehörigen Beschreibung. Es zeigen:
Figur 1 eine erfindungsgemäße Schaltereinheit, in schematisierter Schnittdarstellung in unbetätigtem Zustand,
Figur 2 die Schaltereinheit nach Figur 1, in betätigtem Zustand,
Figur 3 die defekte Schaltereinheit nach Figur 1, in unbetätigtem Zustand und
Figur 4 die defekte Schaltereinheit nach Figur 3, in betätigtem Zustand,
Figur 5 eine abgewandelte Ausführungsform der erfindungsgemäßen Schaltereinheit, in unbetätigtem Zustand,
Figur 6 die Schaltereinheit nach Figur 5, in betätigtem Zustand,
Figur 7 die Schaltereinheit nach Figur 1, in defektem Zustand und
Figur 8 die Schaltereinheit nach Figur 7, in betätigtem Zustand

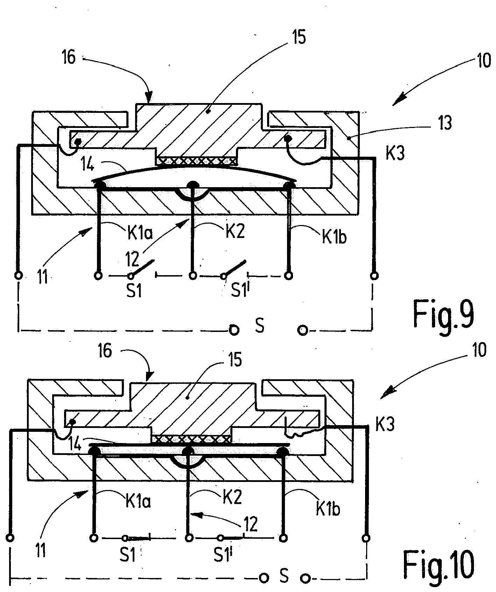

Figur 9 und 10 weitere Schaltereinheiten, die keine Ausführungsformen der vorliegenden Erfindung bilden.

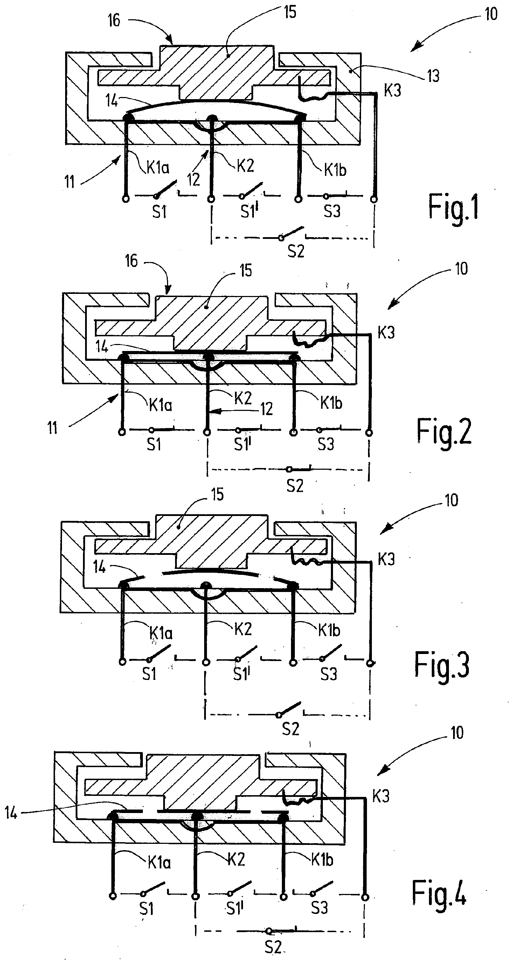

In Figur 1 ist eine Schaltereinheit 10 schematisch veranschaulicht. Zu dieser gehört mindestens eine elektrische Schaltanordnung sowie gegebenenfalls, und falls erforderlich, eine elektrische Auswerteschaltung, um aus der vorhandenen oder fehlenden Kontaktgabe der Schaltereinheit 10 Schaltsignale und gegebenenfalls auch Wartungssignale, Fehlersignale oder dergleichen ableiten zu können. Die Schaltereinheit 10 weist eine erste Kontakteinrichtung 11 und eine zweite Kontakteinrichtung 12 auf, die in einem elektrisch isolierenden vorzugsweise aus Kunststoff bestehenden Gehäuse 13 angeordnet sind. Das Gehäuse 13 kann beispielsweise aus einem thermoplastischen Kunststoff in Spritzgusstechnik bereitgestellt werden. Zumindest besteht die Innenseite des Gehäuses 13 aus einem elektrisch leitfähigen Polymer.

Zu der ersten Kontakteinrichtung 11 gehören Kontakte K1a und ein zweiter Kontakt K1b, die in dem Gehäuse 13 ortsfest in einem Abstand voneinander angeordnet und elektrisch miteinander verbunden sind. Die zweite Kontakteinrichtung 12 umfasst mindestens einen elektrischen Kontakt K2, der zwischen den beiden Kontakten K1a, K1b der ersten Kontakteinrichtung 11 ortsfest angeordnet und von diesen elektrisch isoliert ist. die Kontakte K1a, K1b, K2 sind vorzugsweise in einer gemeinsamen Ebene angeordnet.

Ein Schließelement 14, beispielsweise in Form eines metallischen gewölbten Kontaktelements, stützt sich mit seinen Enden auf den Kontakten K1a, K1b ab und steht im Ruhezustand in einem Abstand zu dem Kontakt K2. Das Schließelement 14 kann als Schnappfeder ausgebildet und zu diesem Zweck in zwei Richtungen gewölbt sein. Dies ist jedoch nicht zwingend - das Schließelement 14 kann auch als einfach gewölbter oder auch gerader Metallstreifen ausgebildet sein. In letzterem Fall kann der mittlere Kontakt K2 tiefer liegen als die beiden anderen Kontakte K1a, K1b. Außerdem kann das Schließelement 14 sowohl aus Metall als auch aus einem anderen geeigneten elektrisch leitfähigen Material, z.B. mit Metall- oder Kohlenstoffpartikeln compoundierten oder intrinsisch leitfähigen Polymeren, einem Verbundmaterial oder dergleichen, ausgebildet sein. Das Schließelement 14 überspannt den Abstand zwischen den Kontakten K1a und K1b, wobei ein mittlerer Bereich des Schließelements 14 in einem Abstand zu dem Kontakt K2 steht. In diesem Bereich berührt das Betätigungselement 15 das Schließelement 14, so dass es, wenn es niedergedrückt wird, das Schließelement 14 an den Kontakt K2 andrückt.

Zu der Schaltereinheit 10 gehört außerdem ein Betätigungselement 15, das wenigsten eine elektrisch leitfähige Zone aufweist oder im Ganzen elektrisch leitfähig ausgebildet und in dem Gehäuse 13 beweglich angeordnet ist. Das Betätigungselement 15 steht mit dem Schließelement 14 in Berührung oder kann mit diesem in Berührung gebracht werden. Außerdem kann das Betätigungselement 15 der direkten manuellen Betätigung zugänglich sein. Es weist dazu eine Betätigungsfläche 16 auf, auf die zur Betätigung Druck auszuüben ist. Dazu kann die Betätigungsfläche 16 manuell zugänglich sein oder, wie es bevorzugt wird, unmittelbar oder mittelbar mit einem Betätigungsknopf, einer Betätigungsplatte oder anderen mechanischen Betätigungsmitteln in Verbindung stehen.

Das Betätigungselement 15 kann aus einem intrinsisch oder extrinsisch leitenden Kunststoff bestehen. Bevorzugt werden jedoch Ausführungsformen mit einem compoundierten Kunststoff, der seine elektrische Leitfähigkeit durch eine Beimengung elektrisch leitender Partikel, wie beispielsweise Kohlenstoffpartikel, Metallpartikel oder dergleichen, erhalten hat. Der spezifische elektrische Widerstand kann dabei zum Beispiel auf etwa 500 Ohm/cm festgelegt sein. Das Betätigungselement 15 kann zur Herstellung der elektrischen Leitfähigkeit oder zur Erhöhung derselben auch einen metallischen Überzug und/oder ein oder mehrere metallische Inlays aufweisen. Außerdem steht es mit einem dritten Kontakt K3 in elektrischer Verbindung. Dazu kann ein von dem Kontakt K3 ausgehendes flexibles Kontaktmittel wie beispielsweise ein Draht, eine Litze oder dergleichen in den Kunststoffkörper des Betätigungselements 15 eingelassen und mit dem Kontakt K3 verbunden sein. Alternativ kann der Kontakt K3 über einen flexiblen leitenden Kunststoffsteg oder eine elektrisch leitende Kunststoffmembrane mit dem Kontakt K3 verbunden sein. In einer besonders vorteilhaften Ausführung kann das Betätigungselement 15 zum Anschluss an den Kontakt K3 mit einer oder mehreren z.B. in einem additiven Fertigungsverfahren, d.h. einem geeigneten Druckverfahren, z.B. dem Aerosol-InkJet-Verfahren, aufgebrachten Leiterbahn(en) versehen sein. Bei diesem Verfahren wird die Leiterbahn durch ein leitfähiges, nach dem Aufbringen ausgehärtetes Fluid gebildet, das als leitfähige Tinte als Aerosolstrahl auf den Steg oder die Membrane aus Kunststoff aufgebracht wird, der oder die das Betätigungselement 15 mit dem Gehäuse 13 und somit mit dem Kontakt K3 verbindet.

Sollte das Betätigungselement 15 ein Metallinlay enthalten, kann der Kontakt K3 mit diesem verbunden sein. Das Metallinlay kann außerdem an einer dem Schließelement 14 zugewandten Seite freiliegen. Alternativ kann das Metallinlay in einem gewissen Abstand zu der Kontaktfläche des Betätigungselements 15 zu dem Schließelement 14 enden, so dass zwischen dem Betätigungselement 15 und dem Schließelement 14 ein Kunststoff/Metall-Kontakt hergestellt ist. Dieser ist reibungs- und verschleißarm. Ferner kann statt des konventionellen Metallinlays (z.B. aus Nickel-beschichtetem Edelstahl) vorzugsweise Nitinol als Basismetall genutzt werden, welches einerseits bei Betätigung ein Schaltsignal durch Änderung seiner Kristallstruktur erzeugt und somit keine weitere Kontaktierungsstelle erfordert. Weiterhin zeichnet sich dieses Metall durch eine vergleichsweise zu konventionellen Metallinalys sehr hohe Lebensdauer aus und ermöglicht darüber hinaus eine Funktion als Sensorelement.

Die in Figur 1 veranschaulichte Konfiguration der Schaltereinheit 10 stellt mehrere Schalterstromkreise bereit:
Ein erster Schalterstromkreis S1 wird von der ersten Kontakteinrichtung 11, der zweiten Kontakteinrichtung 12 und dem Schließelement 14 gebildet.

Ein zweiter Schalterstromkreis S2 wird von dem Betätigungselement 15, dem Schließelement 14 und der zweiten Kontakteinrichtung 12 gebildet.

Außerdem kann dieser zweite Schalterstromkreis noch den dritten Kontakt K3 umfassen.

Die soweit beschriebene Schaltereinheit 10 arbeitet wie folgt:
In unbetätigtem Zustand hat die Schaltereinheit 10 den Schaltzustand nach Figur 1, in dem beide Schalterstromkreise S1, S2 offen sind. Wird das Betätigungselement 15 jedoch durch Beaufschlagung seiner Betätigungsfläche 16 mit einer Betätigungskraft gegen die Kraft einer nicht weiter veranschaulichten Feder und/oder gegen die Federkraft des Schließelements 14 niedergedrückt, so dass das Schließelement 14 die zweite Kontakteinrichtung 12, d.h. den Kontakt K2 berührt, schließen sowohl der erste Schalterstromkreis S1 wie auch der zweite Schalterstromkreis S2. Ist das Betätigungselement 15 permanent niederohmig, wird das Schalten beider Schalterstromkreise S1 und S2 bei normaler Betätigungskraft von der nicht weiter veranschaulichten Auswerteeinheit erfasst und als Schaltsignal gewertet.

Wie in einem Fehlerszenario in den Figuren 3 und 4 veranschaulicht ist, kann ein Fehler vorliegen, der eine ordnungsgemäße Kontaktgabe im ersten Schalterstromkreis S1 bei Betätigung der Schaltereinheit 10 nicht gestattet. Ein solcher Fehler kann beispielsweise ein Bruch des Schließelements 14, eine Abnutzung oder Oxidation der Kontakte K1a, K1b und/oder K2 oder ein ähnlicher Fehler sein. In diesem Fall bleibt bei Betätigung des Betätigungselements 15 der erste Schalterstromkreis S1 offen (siehe Figur 3 und Figur 4). Hingegen ist in dem zweiten Schalterstromkreis S2 zumindest, wenn noch ein gewisser elektrischer Kontakt zu dem zweiten Kontakt K1 herstellbar ist, eine Kontaktgabe zu verzeichnen, d.h. der zweite Schalterstromkreis S2 schließt. Der zweite Schalterstromkreis S2 führt den Schalterstrom als Querstrom durch das Schließelement 14 während der erste Schalterstromkreis S1 den Schalterstrom als Längsstrom durch dasselbe führt.

Nachdem das Betätigungselement 15 vorzugsweise aus leitfähigem Kunststoff besteht und somit von Natur aus etwas hochohmiger ist als ein Metallteil, spielen etwaige Übergangswiderstände an dem Kontakt K2 für den zweiten Schalterstromkreis eine untergeordnete Rolle. Die an den zweiten Schalterstromkreis S2 angeschlossene Auswerteeinrichtung kann Kontaktgabe beispielsweise schon dann vermelden, wenn der elektrische Widerstand in diesem Schalterstromkreis von einem im Megaohmbereich oder darüber liegenden Wert auf einen im Kiloohmbereich liegenden Widerstand fällt. Damit ist die Erzeugung von Schaltersignalen auch bei verschlissenem Schalter möglich. Jedoch kann die Auswerteeinheit aus dem Umstand, dass der erste Schalterstromkreis S1 nicht mehr schließt und das Signal allein von dem zweiten Schalterstromkreis S2 ausgeht, ein Warnsignal, Wartungsaufforderungssignal oder dergleichen erzeugen.

Die Schaltereinheit 10 nach den Figuren 1 bis 4 bietet weitere Möglichkeiten. Beispielsweise kann allen vor- und nachfolgend beschriebenen Ausführungsformen das Betätigungselement 15 im Ruhezustand außer Kontakt mit dem Schließelement 14 stehen und nur bei Betätigung in Kontakt mit diesem geraten. Dies ändert nichts an der vorgeschriebenen Funktion. Außerdem kann das Betätigungselement 15 bei allen vor- und nachbeschriebenen Ausführungsformen erst unter erhöhtem Druck elektrisch leitfähig sein, so dass auch der dann nötige erhöhte Betätigungskraftaufwand und somit der verminderte ohmsche Widerstand in der Ein-Position des zweiten Schalterstromkreises ein Signal für dringenden Wartungsbedarf ist.

Weitere Möglichkeiten ergeben sich beispielsweise durch Auswertung eines alternativen Strompfades für den ersten Schalterstromkreis, der in Figur 1 bis 4 mit S1' bezeichnet ist. Dieser Schalterstromkreis besteht zwischen den Kontakten K1b und K2 und ist äquivalent zu dem Schalterstromkreis S1, der zwischen dem Kontakt K1a und dem Kontakt K2 gebildet ist.

Des Weiteren kann ein dritter Schalterstromkreis S3 in die Auswertung und Überwachung einbezogen werden, der zwischen dem Betätigungselement 15, dem Schließelement 14 und der ersten Kontakteinrichtung 11 ausgebildet ist. Dieser Stromkreis ist bei intaktem Schalter immer geschlossen. Er öffnet jedoch, sobald die elektrische Verbindung zwischen dem Schließelement 14 und der Kontakteinrichtung 11 oder zwischen dem Betätigungselement 15 und dem Schließelement unterbrochen ist. Ursachen können Bruch des Schließelements 14 oder anderweitige Fehlerursachen sein.

Insgesamt ergibt sich folgendes Schaltverhalten der Schaltereinheit 10:

| | S1 | S1' | S2 | S3 |
|---|---|---|---|---|
| Intakt unbetätigt | 0 | 0 | 0 | 1 |
| Intakt betätigt | 1 | 1 | 1 | 1 |
| Defekt unbetätigt | 0 | 0 | 0 | 0 |
| Defekt betätigt | 0 | 0 | 1 | 0 |

"0" steht für einen offenen Schalter und "1" für einen geschlossenen Schalter. Der Tabelle gemäß kann der Schalter S2 des zweiten Schalterstromkreises auch bei defektem Schließelement 14 noch ein gültiges Schaltsignal erzeugen. Aus dem bei Vorliegen eines Defekts veränderten Verhalten des ersten Schalterstromkreises S1 kann die Auswerteschaltung ein Defektsignal ableiten. Zur Erhöhung der Sicherheit kann auch das Verhalten des dritten Schalterstromkreises S3 ausgewertet werden, das sowohl im betätigten als auch in unbetätigten Zustand einen sich anbahnenden oder vorhandenen Schalterdefekt anzeigt.

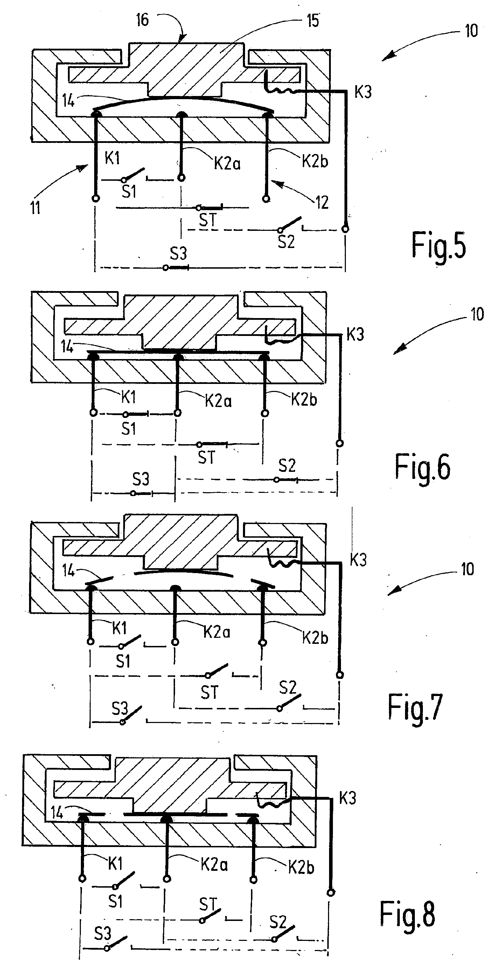

Eine weiter abgewandelte Ausführungsform der Erfindung ist den Figuren 5 bis 8 zu entnehmen, für die vorige Beschreibung mit nachfolgend beschriebenen Ausnahmen entsprechend gilt:
Im Unterschied zu der vorbeschriebenen Ausführungsform ist der Kontakt K2 der zweiten Kontakteinrichtung hier nicht zwischen den Kontakten K1a, K1b der ersten Kontakteinrichtung angeordnet. Vielmehr umfasst die erste Kontakteinrichtung 11 leidglich einen Kontakt K1, wohingegen die zweite Kontakteinrichtung 12 zwei Kontakte K2a, K2b umfasst. Der Kontakt K2a ist dabei zentrisch zwischen den Kontakten K1 und K2b etwa mittig unter dem Betätigungselement 15 angeordnet. Das Schließelement 14 verbindet die Kontakte K1 und K2b miteinander und überspannt den Kontakt K2a in Abstand zu diesem. Durch Betätigung des Betätigungselements 15 kann das Schließelement 14 an den Kontakt K2a herangedrückt werden und diesen elektrisch kontaktieren.

Der erste Schalterstromkreis S1 ist zwischen den Kontakten K1 und K2a ausgebildet. Der zweite Stromkreis S2 ist zwischen dem Betätigungselement 15 und dem Kontakt K2a ausgebildet, wobei er über das Schließelement 14 führt. Wie bei der Ausführungsform nach Figur 1 bis 4 auch hier führt der zweite Schalterstromkreis S2 den Schalterstrom als Querstrom durch das Schließelement 14 während der erste Schalterstromkreis S1 den Schalterstrom als Längsstrom durch dasselbe führt. Diese Eigenschaft ist allen erfindungsgemäßen Ausführungsformen gemein.

Ein dritter Schalterstromkreis S3 kann optional vorgesehen sein, der von dem Betätigungselement 15 über das Schließelement 14 zu dem ersten Kontakt K1 führt. Außerdem kann ein Teststromkreis vorgesehen sein, der von dem ersten Kontakt K1 über das Schließelement 14 zu dem zweiten Kontakt K2b der zweiten Kontakteinrichtung 12 führt.

In Ruhezustand der intakten Schaltereinheit 10, sind die Schalter S1 und S2 offen, wobei der Teststromkreis ST und der dritte Schalterstromkreis S3 geschlossen sind. Bei Betätigung der Schaltereinheit 10 (Figur 6) schließen der erste und der zweite Schalterstromkreis S1 und S2. Der Teststromkreis ST und der dritte Schalterstromkreis S3 bleiben geschlossen.

Im Defektfall schließt der erste Schalterstromkreis S1 beispielsweise infolge eines Bruchs des Schließelements 14 nicht mehr. Allerdings arbeitet der zweite Schalterstromkreis S2 nach wie vor ordnungsgemäß. Offen sind jedoch sowohl in betätigtem wie auch in unbetätigtem Zustand der Teststromkreis ST und der dritte Schalterstromkreis S3. Damit ist ein Vorliegen der Fehler sicher erkennbar. Insgesamt ergibt sich folgendes Schaltverhalten:

| | S1 | S2 | S3 | ST |
|---|---|---|---|---|
| Intakt unbetätigt | 0 | 0 | 1 | 1 |
| Intakt betätigt | 1 | 1 | 1 | 1 |
| Defekt unbetätigt | 0 | 0 | 0 | 0 |
| Defekt betätigt | 0 | 1 | 0 | 0 |

"0" steht wiederum für einen offenen Schalter und "1" für einen geschlossenen Schalter. Wie aus der Tabelle ersichtlich kann der Schalter S2 des zweiten Schalterstromkreises auch bei defektem Schließelement 14 noch ein gültiges Schaltsignal erzeugen. Aus dem bei Vorliegen eines Defekts veränderten Verhalten des ersten Schalterstromkreises S1 kann die Auswerteschaltung ein Defektsignal ableiten. Zur Erhöhung der Sicherheit kann auch das Verhalten des dritten Schalterstromkreises S3 und/oder des Teststromkreises ST ausgewertet werden, das sowohl im betätigten als auch in unbetätigten Zustand einen sich anbahnenden oder vorhandenen Schalterdefekt anzeigt.

Die erfindungsgemäße Schaltereinheit kann zum Beispiel als drucksensitiver Schalter mit Metall- oder Kohlenstoffpartikeln compoundierten bzw. intrinsisch leitfähigen Polymeren für den Einsatz in einer Aufzugsbedientafel vorgesehen werden. Ist die Leitfähigkeit des Betätigungselements 15 von dem ausgeübten Druck abhängig, kann über die Überwachung des sich in dem zweiten Schalterstromkreis einstellenden Widerstands eine prädiktive Instandhaltung vorgenommen werden. Nimmt der Widerstand des zweiten Schalterstromkreis S2 zum Beispiel mit der Zeit infolge der steigenden erforderlichen Bedienkräfte bei Betätigung ab, kann eine angeschlossene Auswerteeinheit dies erfassen und zunächst weiterhin die ordnungsgemäßen Schaltsignale erzeugen, zugleich aber ein zur Wartung oder Instandhaltung aufforderndes Signal an den Bediener oder einen Fehlerspeicher oder eine Überwachungsleitstelle schicken. So kann auf einfache Weise eine Schaltereinheit mit Betätigungskrafterfassung geschaffen werden, deren Auswerteeinheit die nötige Betätigungskraft erfasst und anhand durch Vergleich derselben mit einem Schwellwert entscheidet, ob die Schaltereinheit eine Verschleißgrenze erreicht hat und/oder eine Wartung erforderlich ist.

Die erfindungsgemäße Schaltereinheit nutzt einen Schalter mit einem beweglich gelagerten oder verformbar ausgebildeten Schließelement 14, das aus einem oder ein- oder mehrfach gewölbten, flächenhaft geformten, elektrisch leitfähigem Material ausgebildet ist. Es ist sowohl Teil eines ersten Schalterstromkreises S1 wie auch Teil eines zweiten Schalterstromkreises S2. In dem ersten Schalterstromkreis S1 wird es längs, d.h. innerhalb seiner Fläche bestromt. Innerhalb des zweiten Stromkreises S2 wird es quer, d.h. senkrecht zu seiner Fläche bestromt. Durch die Einbindung in unterschiedliche Schalterstromkreise S1, S2 und unterschiedliche Durchströmungsrichtung ist es möglich, auftretende Fehler vor dem Totalausfall der Schaltereinheit 10 zu erkennen und den Betrieb zunächst aufrecht zu erhalten. Außerdem wird das Schließelement 14 vorzugsweise durch ein elektrisch leitfähiges aus Kunststoff bestehendes Betätigungselement 15 bewegt, was verschleißmindernd wirkt und weitere Gestaltungsmöglichkeiten insbesondere hinsichtlich der Erfassung der Betätigungskraft bietet.

**Bezugszeichen**

| | |
|---|---|
| 10 | Schaltereinheit |
| 11 | erste Kontakteinrichtung |
| 12 | zweite Kontakteinrichtung |
| 13 | Gehäuse |
| K1a | erster Kontakt der ersten Kontakteinrichtung 11 |
| K1b | zweiter Kontakt der ersten Kontakteinrichtung 11 |
| K2 | Kontakt der zweiten Kontakteinrichtung |
| 14 | Schließelement |
| 15 | Betätigungselement |
| 16 | Betätigungsfläche |
| K3 | dritter Kontakt |
| S1 | erster Schalterstromkreis |
| S2 | zweiter Schalterstromkreis |
| S3 | dritter Schalterstromkreis |
| ST | Teststromkreis |

## Patentansprüche

1. Schaltereinheit (10) und Gehäuse, die Schaltereinheit (10) umfassend wenigstens eine erste Kontakteinrichtung (11), wenigstens eine zweite Kontakteinrichtung (12), ein beweglich gelagertes und oder verformbar ausgebildetes Schließelement (14) zur Herstellung und Trennung einer elektrischen Verbindung zwischen der ersten Kontakteinrichtung (11) und der zweiten Kontakteinrichtung (12), ein elektrisch leitfähiges Betätigungselement (15), das dem Schließelement (14) zugeordnet ist, einen ersten Schalterstromkreis (Sl), der die erste Kontakteinrichtung (11), die zweite Kontakteinrichtung (12) und das Schließelement (14) beinhaltet, einen zweiten Schalterstromkreis (S2), der das Betätigungselement (15), das Schließelement (14) und die zweite Kontakteinrichtung (12) beinhaltet **dadurch gekennzeichnet, dass**
das Gehäuse, in welches die Schaltereinheit (10) integriert wird, zumindest an der Innenseite aus einem elektrisch leitfähigen Polymer besteht, welches über eine Kontaktierung mit dem Betätigungselement (15) eine elektrisch leitfähige Verbindung aufweist und das ferner über einen weiteren Kontakt mit einer externen Auswerteeinheit verbunden werden kann.

2. Schaltereinheit und Gehäuse nach einem der vorstehenden Ansprüche,
**dadurch gekennzeichnet, dass** ein Schalterteststromkreis (ST) vorgesehen ist, der die erste Kontakteinrichtung (11) und das Schließelement (14) beinhaltet und dass der Schalterteststromkreis (ST) vorzugsweise außerdem die zweite Kontakteinrichtung (12) beinhaltet.

3. Schaltereinheit und Gehäuse nach Anspruch 1, **dadurch gekennzeichnet,**
**dass** ein dritter Schalterstromkreis (S3) vorgesehen ist, der das Betätigungselement (15), das Schließelement (14) und die erste Kontakteinrichtung (11) beinhaltet.

4. Schaltereinheit und Gehäuse nach einem der vorstehenden Ansprüche,
**dadurch gekennzeichnet, dass** die erste Kontakteinrichtung (11) zwei Kontakte (K1a, K1b) umfasst, die miteinander elektrisch verbunden sind.

5. Schaltereinheit und Gehäuse nach Anspruch 4, **dadurch gekennzeichnet,**
**dass** die zweite Kontakteinrichtung (12) einen Kontakt (K2) aufweist, der zwischen den Kontakten (K1a, K1b) der ersten Kontakteinrichtung (11) angeordnet ist, wobei das Schließelement (12) in ständiger elektrischer Verbindung mit den beiden Kontakten (K1a, K1b) der ersten Kontakteinrichtung (11) steht.

6. Schaltereinheit und Gehäuse nach einem der vorstehenden Ansprüche,
**dadurch gekennzeichnet, dass** die zweite Kontakteinrichtung (12) zwei Kontakte (K2a, K2b) umfasst, die untereinander elektrisch nicht verbunden sind.

7. Schaltereinheit und Gehäuse nach Anspruch 6, **dadurch gekennzeichnet,**
**dass** die erste Kontakteinrichtung (11) einen Kontakt (K1) aufweist, der mit dem Schließelement (14) in ständiger elektrischer Verbindung steht, und dass die zweite Kontakteinrichtung (12) zwei Kontakte (K2a, K2b) aufweist, von denen einer (K2b) mit dem Schließelement (14) in ständiger elektrischer Verbindung steht und von denen der andere (K2a) zwischen diesem Kontakt (K2b) und dem Kontakt (K1) der ersten Kontakteinrichtung (11) angeordnet ist.

8. Schaltereinheit und Gehäuse nach einem der vorstehenden Ansprüche, **dadurch gekennzeichnet, dass** das leitfähige Betätigungselement (15) ein Kunststoffelement ist.

9. Schaltereinheit und Gehäuse nach Anspruch 8, **dadurch gekennzeichnet,**
**dass** das Kunststoffelement aus einem Kunststoff besteht, der extrinsisch leitend ist.

10. Schaltereinheit und Gehäuse nach einem der vorstehenden Ansprüche,
**dadurch gekennzeichnet, dass** das Betätigungselement (15) ein Metall-Inlay aufweist, das beispielsweise aus Edelstahl oder aus Nitinol bestehen kann.

11. Schaltereinheit und Gehäuse nach Anspruch 8, **dadurch gekennzeichnet,**
**dass** das Kunststoffelement aus einem Kunststoff besteht, der eine druckabhängige Leitfähigkeit aufweist.

12. Schaltereinheit und Gehäuse nach einem der vorstehenden Ansprüche,
**dadurch gekennzeichnet, dass** das Betätigungselement (15) zur Kontaktierung mit einer in einem additiven Fertigungsverfahren aufgebrachten Leiterbahn versehen ist.

## Claims

1. Switch unit (10) and housing, wherein the switch unit (10) comprises:
at least one first contact device (11),
at least one second contact device (12),
a closing element (14) which is movably mounted and/or deformable for creating and
separating an electrical connection between the first contact device (11) and the second contact device (12),
an electrically conductive actuating element (15) which is assigned to the closing element (14),
a first switch circuit (S1) which contains the first contact device (11), the second contact device (12) and the closing element (14),
a second switch circuit (S2) which contains the actuating element (15), the closing element (14) and the second contact device (12),
**characterised in that**
the housing in which the switch unit (10) is integrated consists at least on the inside of an electrically conductive polymer which has an electrically conductive connection with the actuating element (15) via contacting and which furthermore may be connected to an external evaluation unit via a further contact.

2. Switch unit and housing as claimed in any of the preceding claims, **characterised in that** a switch test circuit (ST) is provided which contains the first contact device (11) and the closing element (14), and that the switch test circuit (ST) preferably also contains the second contact device (12).

3. Switch unit and housing according to claim 1, **characterised in that** a third switch circuit (S3) is provided which contains the actuating element (15), the closing element (14) and the first contact device (11).

4. Switch unit and housing according to any of the preceding claims, **characterised in that** the first contact device (11) has two contacts (K1a, K1b) which are electrically connected together.

5. Switch unit and housing according to claim 4, **characterised in that** the second contact device (12) has a contact (K2) which is arranged between the contacts (K1a, K1b) of the first contact device (11), wherein the closing element (12) is in permanent electrical connection with the two contacts (K1a, K1b) of the first contact device (11).

6. Switch unit and housing according to any of the preceding claims, **characterised in that** the second contact device (12) has two contacts (K2a, K2b) which are not electrically connected together.

7. Switch unit and housing according to claim 6, **characterised in that** the first contact device (11) has a contact (K1) which is in permanent electrical connection with the closing element (14), and that the second contact device (12) has two contacts (K2a, K2b), of which one (K2b) is in permanent electrical connection with the closing element (14) and the other (K2a) is arranged between said contact (K2b) and the contact (K1) of the first contact device (11).

8. Switch unit and housing according to any of the preceding claims, **characterised in that** the conductive actuating element (15) is a plastic element.

9. Switch unit and housing according to claim 8, **characterised in that** the plastic element consists of a plastic which is extrinsically conductive.

10. Switch unit and housing according to any of the preceding claims, **characterised in that** the actuating element (15) has a metal inlay which may consist for example of special steel or nitinol.

11. Switch unit and housing according to claim 8, **characterised in that** the plastic element consists of a plastic which has a pressure-dependent conductivity.

12. Switch unit and housing according to any of the preceding claims, **characterised in that** the actuating element (15) is provided for contacting with a conductor track applied in an additive production process.

## Revendications

1. Unité de commutateur (10) et boîtier, l'unité de commutateur (10) comprenant
au moins un premier dispositif de contact (11),
au moins un deuxième dispositif de contact (12),
un élément de fermeture (14) qui est monté de façon mobile et/ou est réalisé de manière déformable et qui est destiné à établir et interrompre une liaison électrique entre le premier dispositif de contact (11) et le deuxième dispositif de contact (12),
un élément d'actionnement (15) conducteur électrique, qui est associé à l'élément de fermeture (14),
un premier circuit de commutateur (S1) qui comporte le premier dispositif de contact (11), le deuxième dispositif de contact (12) et l'élément de fermeture (14),
un deuxième circuit de commutateur (S2) qui comporte l'élément d'actionnement (15), l'élément de fermeture (14) et le deuxième dispositif de contact (12),
**caractérisée en ce que**
le boîtier, dans lequel l'unité de commutateur (10) est intégrée, est constitué au moins sur la face interne d'un polymère conducteur électrique qui présente une liaison conductrice électrique, par l'intermédiaire d'une connexion avec l'élément d'actionnement (15), et qui peut en outre être relié par un autre contact à une unité d'évaluation externe.

2. Unité de commutateur et boîtier selon l'une des revendications précédentes, **caractérisée en ce qu'**il est prévu un circuit d'essai de commutateur (ST) qui comporte le premier dispositif de contact (11) et l'élément de fermeture (14)j, et **en ce que** le circuit d'essai de commutateur (ST) comporte de préférence en outre le deuxième dispositif de contact (12).

3. Unité de commutateur et boîtier selon la revendication 1, **caractérisée en ce qu'**il est prévu un troisième circuit de commutateur (S3) qui comporte l'élément d'actionnement (15), l'élément de fermeture (14) et le premier dispositif de contact (11).

4. Unité de commutateur et boîtier selon l'une des revendications précédentes, **caractérisée en ce que** le premier dispositif de contact (11) comprend deux contacts (K1a, K1b) qui sont reliés électriquement l'un à l'autre.

5. Unité de commutateur et boîtier selon la revendication 4, **caractérisée en ce que** le deuxième dispositif de contact (12) présente un contact (K2) qui est disposé entre les contacts (K1a, K1b) du premier dispositif de contact (11), l'élément de fermeture (12) étant en liaison électrique permanente avec les deux contacts (K1a, K1b) du premier dispositif de contact (11).

6. Unité de commutateur et boîtier selon l'une des revendications précédentes, **caractérisée en ce que** le deuxième dispositif de contact (12) comprend deux contacts (K2a, K2b) qui ne sont pas reliés électriquement entre eux.

7. Unité de commutateur et boîtier selon la revendication 6, **caractérisée en ce que** le premier dispositif de contact (11) présente un contact (K1) qui est en liaison électrique permanente avec l'élément de fermeture (14), et **en ce que** le deuxième dispositif de contact (12) présente deux contacts (K2a, K2b) dont un (K2b) est en liaison électrique permanente avec l'élément de fermeture (14), et dont l'autre (K2a) est disposé entre ce contact (K2b) et le contact (K1) du premier dispositif de contact (11).

8. Unité de commutateur et boîtier selon l'une des revendications précédentes, **caractérisée en ce que** l'élément d'actionnement (15) conducteur est un élément en matière plastique.

9. Unité de commutateur et boîtier selon la revendication 8, **caractérisée en ce que** l'élément en matière plastique est constitué d'une matière plastique qui est conductrice extrinsèque.

10. Unité de commutateur et boîtier selon l'une des revendications précédentes, **caractérisée en ce que** l'élément d'actionnement (15) présente un insert métallique qui peut être constitué par exemple d'acier inoxydable ou de nitinol.

11. Unité de commutateur et boîtier selon la revendication 8, **caractérisée en ce que** l'élément en matière plastique est constitué d'une matière plastique qui présente une conductibilité dépendant de la pression.

12. Unité de commutateur et boîtier selon l'une des revendications précédentes, **caractérisée en ce que**, en vue de l'établissement du contact, l'élément d'actionnement (15) est doté d'une piste conductrice appliquée au cours d'un procédé de fabrication additif.
